Europäisches Patentamt

**European Patent Office**

Office européen des brevets

(11) Publication number: **0 079 644**
A1

## EUROPEAN PATENT APPLICATION

(21) Application number: **82201392.6**

(22) Date of filing: **05.11.82**

(51) Int. Cl.³: **C 02 F 1/78**

(30) Priority: **12.11.81 NL 8105134**

(43) Date of publication of application:
**25.05.83 Bulletin 83/21**

(84) Designated Contracting States:
**AT BE CH DE FR GB IT LI LU NL SE**

(71) Applicant: **Ionisation Europe B.V.**
**Buiten-Walevest 15**
**NL-3311 AD Dordrecht(NL)**

(72) Inventor: **Pincon, Andrew J.**
**1819 Grand Avenue**
**Chicago III.(US)**

(74) Representative: **Mommaerts, Johan Hendrik,**
**Dipl.-Phys.**
**Octrooibureau Lux Nassau-Odyckstraat 38**
**NL-2596 AJ Den Haag(NL)**

(54) A system for treating water.

(57) A water treatment system, comprising a container [5] for the water to be treated, with means [4] for dispersing therein air which has been previously activated with short-wave radiation with a wave length of less than 200 nm, which container is connected, by means of a circulation duct, with additional water treatment means, which, on the other hand, are connected again with the container, in which additional means residual organic material and/or reaction products suspended and/or dissolved in the circulated water are removed from the water. Said additional means comprise, in particular, filters [8] and/or ion exchangers [13].

EP 0 079 644 A1

Croydon Printing Company Ltd.

----------------------------------------------

Current water treatment methods are not suitable for several purposes. An example thereof is fish breeding, also called fish farming. The fishes are kept in basins, and the water therein is continuously contaminated by the excrements of the fishes and by uneaten food. These contaminants sink to the bottom and cannot be removed by simply refreshing the water. These contaminants will not only promote the development of micro-organisms which are often noxious for the fishes, but the decomposing contaminants and such micro-organisms will consume a substantial part of the oxygen present in the water, so that an insufficient amount thereof will be available for the fishes. All this will lead to a slow growth and a high mortality of the fishes, and, thus, to substantial financial losses. Furthermore fish farming can be limited by the fact that the available natural water is contaminated by industrial pollutants, fertilizers, pesticides and the like, or by water shortage.

In view of the fact that fish farming may be a solution for protein shortages in many parts of the world, finding a solution for the purification of fish farming basins is an important object.

Aeration and filtration of the water of such a basin has proved to be insufficient, since, in view of the large amounts of water to be continuously filtered, the filters, in particular sand filters, become very bulky and expensive, and these filters must be repeatedly washed back to remove the organic matter filtered out, which requires very large amounts of water which are to be discharged, and this solution has proved to be too expensive for economically operating a fish farm. The same holds for so-called biological filters in which the organic matter present in the water is digested by micro-organisms.

Moreover such filters cannot retain suspended particles smaller than a given size, e.g. 20 μm, so that the filtrate will contain such particles including micro-organisms, and dissolved substances cannot be removed in a filter either.

Similar problems arise in other cases in which organic matter has to be removed from water, such as in swimming pools, laundries, and also in drinking or sewage water treatment plants.

One has already tried to attack such organic contamination by means of strong oxidants, in particular ozone, but also this has proved to be inefficient, in particular in those cases that the ozone containing water itself or the escaping ozone may be harmful for humans or animals. Ozone is generally produced by means of electrical discharges in air, which requires much energy, and, because of the rather fast dissociation of ozone, an excess amount thereof is to be used. Moreover not only the oxygen of the treated air is affected by the discharges, but also the nitrogen will be excited, dissociated and/or ionized, which will lead to the formation of noxious nitrogen oxides, and such oxides will be formed at the expense of the ozone. The ozone concentration cannot be raised beyond a given limit because of its noxious effects on living matter, which is, of course, very important in the case of fish farming. Another disadvantage is that ozone increases the surface tension of the water which will unfavourably influence the filtration of the water.

On the other hand ion exchangers have been used for removing dissolved matter, such as ammonia which is a product of the decomposition of organic matter, or other nitrogen compounds which can be present in water and can originate from fertilizers and the like. However the water will, generally, contain also micro-organisms and other organic matter which cannot be removed by filtration, and it has appeared that favourable conditions for the development of such organisms can exist in an ion exchanger. The active surfaces thereof will, therefore, quickly be covered by gelly layers consisting of micro-organisms, organic and mineral decomposition products etc., thus inactivating the exchanger. The latter can be reactivated by washing with water, in particular salt water, but discharging large amounts of salt water containing the exchange products is often a problem. Therefore the use of ion exchangers in purification systems has proved to be practically impossible. This holds in particular for applications such as fish farming, but also in the case of treating ground water for making it suitable for being used as drinking water for humans or cattle by removing therefrom pollutants such as fertilizers, pesticides etc., the use of ion exchangers has proved to be impractical, since ground water contains sufficient micro-organisms and other organic matter for obtaining the same undesired effects in the exchanger.

It is an object of the invention to provide a simple

0079644

system of relatively small dimensions for efficiently treating water containing organic contaminants in a substantially closed loop without noxious or toxic effects on humans and animals, which system is, in particular, suitable for fish farming purposes, even in regions with a water shortage or with heavily polluted natural water sources, and requires relatively little energy and maintenance.

From US 4 214 962 a method and an apparatus are known for forming so-called activated oxygen, in which air is led through a space containing lamps emitting radiation with a wave-length of about 200 nm. This radiation will selectively affect the oxygen in the air, and not the nitrogen, so that no harmful nitrogen oxides and the like will be produced. The oxygen is excited, ionized and/or dissociated, and in the presence of water, e.g. water vapour carried by the air, oxygen-hydrogen compounds can be formed. Also ozone can be formed, but its concentration is relatively low, so that the safety limits will not be exceeded. Moreover the activated oxygen has proved, in contrast to ozone, to lower the surface tension of water.

Now the activated oxygen, or better air consisting of activated oxygen and not activated inert nitrogen, has proved to be very effective for treating water containing organic matter, in particular but not exclusively for the above-mentioned fishfarming purposes.

The invention provides a system for such a water treatment, which is characterised by a container for the water to be treated, by means for dispersing air into the water present in said container, by an apparatus for activating air by radiation with short-wave radiation, in particular of less than 200 nm, by an air pump for supplying air to said apparatus, by a water circulating duct connected to          .  said container and provided with water circulating means such as one or more pumps, the other end of said duct opening in                 said container, and by additional water treatment means included in said circulating duct for removing residual organic matter and/or reaction products suspended and/or dissolved therein.

The invention is based on the insight that the organic contaminants including micro-organisms should be attacked in an early stage of development so as to avoid the formation of large amounts of decomposition products which require excessively large additional devices and/or would inactivate such devices, e.g. in the case of ion exchangers.

The activated air introduced into the water is effective to decompose the greater part of the organic matter present in the water without unfavourably affecting higher animals or plants living therein. Therefore the development of micro-organisms living on such organic matter is suppressed, and the decomposition of this matter will not lead to a reduction of the amount of dissolved oxygen. In fact this amount will be kept at the optimal value by the surplus air, so that, if the water is used for fish farming purposes and the like, the optimal living conditions for animals and plants will be provided.

As a consequence of the fact that a substantial part of organic matter is decomposed in this manner, the remainder thereof can be effectively removed in a simple filter, and the reduction of the surface tension of the water by the dissolved activated oxygen contributes to the filtering effect, and, in particular, one common filter of moderate dimensions can be used for a plurality of water basins or containers which are each provided with an individual activating apparatus, and backwashing said filter will only be necessary at relatively long intervals. The over-all dimensions of the system will, therefore, mainly be determined by the dimensions of the water basins or containers.

The additional water treatment means can also comprise ion exchange means. In the first place such means can be included in the circulating duct, and can be adapted for removing dissolved matter from the water circulated therethrough, said means furthermore being connected to supply and discharge ducts for cleaning and regenerating the ion exchange material present therein by means of a washing liquid such as water, in particular salt water. In the container connected to said circulating duct, the organic matter can be substantially removed from the water in a simple and inexpensive manner, and, if necessary, the larger remaining particles can be removed from the water in an additional filter. Thereby it becomes possible to use ion exchangers for removing dissolved substances not affected by the activated oxygen, such as ammonia, without the risk of these exchangers being inactivated by slimy organic residues. For the amount of organic matter including living micro-organisms is so small that it will last a considerable time (which is longer than the normal active period of the ion exchanger) before a substantial deposit of such gelly substances has taken place.

These ion exchangers can be regenerated by means of water, in particular salt water, and discharging water containing exchange products, in particular ammonia and other nitrogen compounds, can be a problem. It has, however, appeared that the water used for regenerating the ion exchangers can be cleaned by means of activated air too, so that it can be used again for regeneration in a closed circuit.

Therefore the ion exchange means can be included in a primary system for removing dissolved matter from a liquid, the container and associated circulating duct constituting a secondary system for periodically regenerating said ion exchange means with water circulated through said container and duct in a substantially closed circuit, the activated air being used for chemically attacking the substances removed from said ion exchange means so as to make the water thus treated reusable for regenerating the latter means. In particular said system can comprise two containers each being provided with air dispersing means and associated activating apparatus, one container being used for a primary treatment of the water to be treated, and the other one being included in the regenerating circuit of an ion exchange means included in the circulating duct of said first container.

The invention will be elucidated below by reference to a drawing, showing a diagrammatic representation of a preferred embodiment of a system according to the invention.

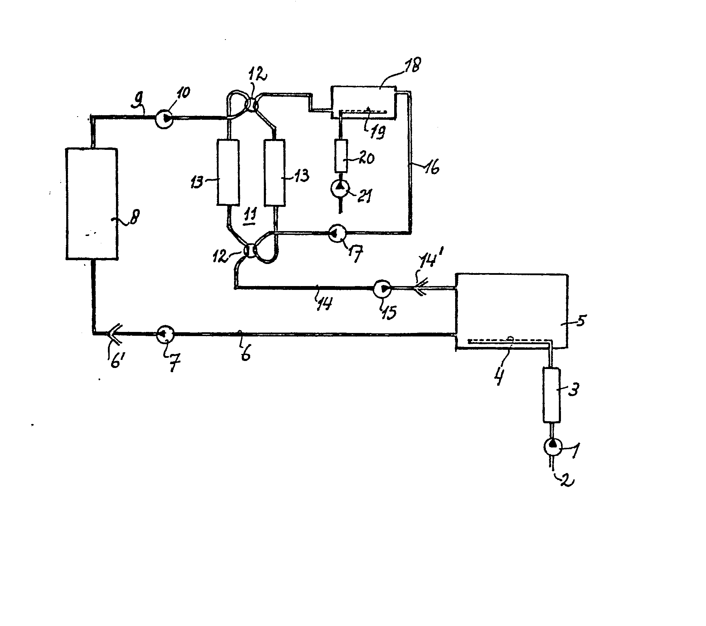

The system shown in the drawing comprises an air pump 1 having a suction duct 2 opening in the air, and its pressure side is connected to an apparatus 3 for irradiating the air supplied thereby with short-wave radiation, in particular with a wave-length of about 200 nm, e.g. as described in US 4 214 962. The output end of said apparatus is connected to an air dispersing means 4 arranged near the bottom of a water basin or container 5.

The basin 5 is, for instance, used for breeding fish for commercial purposes, but can also be a swimming pool, or a vessel for purifying washing water from a laundry, waste water from a meat packing factory, or any other polluted water from which organic matter is to be removed.

With the basin 5 a water discharge duct 6 is connected which is, if required, provided with a pump 7, and which leads to a water filter 8, in particular a sand filter. As indicated at 6', a plurality of ducts 6 can be connected to one single filter 8.

The output duct 9 of this filter 8 is connected, if required by means of a pump 10, to an ion-exchange assembly 11, consisting of two four-way valves 12 and two ion exchangers 13, one valve 12 being connected to the duct 9, and the other one to a return duct 14, provided, if necessary, with a pump 15, and ending in the upper part of the basin 5. As indicated at 14', the return duct 14 may be connected to a plurality of basins 5.

The valves 12 are, furthermore, connected to a duct 16 comprising a pump 17 and a water treatment vessel 18, the latter being provided with an air dispersing means 19, connected to an activating apparatus 20 of the same kind as the apparatus 13 and connected to an air pump 21.

In a first position of the valves 12, the left hand ion exchanger is included in the circuit of the ducts 9 and 14, and the other exchanger is connected in the closed circuit of the duct 16. In the second position of said valves the ion exchangers are interchanged. It will be clear that, instead of said four-way valves, separate and, if desired, mutually coupled valves can be used.

The air activated in the apparatus 3 and dispersed into the water of the basin 5 will attack organic matter present in said basin. Since the disperser 4 is situated near the bottom of said basin, organic matter sunk towards the bottom will be whirled up and, thus, will be brought continuously in contact with the air.

The water is continuously discharged through the duct 6 towards the filter 8, and is, after being stripped of any remaining suspended matter, led towards one of the ion exchangers, in which dissolved contaminants, in particular ammonia and the like, are removed. The treated water is, eventually, returned towards the basin 5.

The other ion exchanger not used for removing dissolved contaminants is regenerated by water, in particular salt water, which is supplied from the container 18 and is, after being led through said exchanger, retured to said container 18. The water circulated through this closed circuit is continuously exposed to the activated air supply by the activating apparatus 20, so that dissolved contaminants such as ammonia are oxidized thereby. Although

**0079644**

in the basin 5 some oxidation of ammonia may occur, the activated air introduced therein will in the first place be used for attacking suspended organic matter. The vessel 18 can be designed so that the residence time of the water therein will be sufficient for effectively removing ammonia and the like therefrom.

If necessary intermediate vessels can be included in the ducts 6, 9 and/or 14 for storing water to be filtered or already filtered. The containers 5 and 18 can be open or closed containers, but in the latter case means should be provided for removing excess air, and the latter can be returned to the suction end of the air pump in question, in which case a closed air circuit is obtained through which activated air escaping from the water is recirculated, and then a high activating efficiency will be obtained.

The invention is not restricted to the specific embodiment described above. For instance the part comprising the elements 16.. 21 can be used separately as a regenerating device for an ion exchanger 11 included in a main circuit of different design, and, in the system as shown, the exchanger 11 can be omitted if no substantial amounts of unwanted dissolved matter are present in the water to be treated.

- 8 -                                    0079644

<u>Claims</u>

1.  System for treating water containing organic matter and/or decomposition products thereof, <u>characterised</u> by a container for the water to be treated, by means for dispersing air into the water present in said container, by an apparatus for activating air by irradiation with short-wave radiation, in particular of less than 200 nm, by an air pump for supplying air to said apparatus, by a water circulating duct connected to          said container and provided with water circulating means such as one or more pumps, the other end of said duct opening in          said container, and by additional water treatment means included in said circulating duct for removing residual organic matter and/or reaction products suspended and/or dissolved therein.

2.  The system of claim 1, <u>characterised</u> in that the additional water treatment means comprise filter means adapted for removing suspended matter from the circulated water.

3.  The system of claim 1 or 2, <u>characterised</u> in that the additional means is common to a plurality of water containers.

4.  The system of any one of claims 1..3, <u>characterised</u> in that said additional means comprise ion exchange means.

5.  The system of claim 4, <u>characterised</u> in that the ion exchange means is included in the circulating duct, and is adapted for removing dissolved matter from the water circulated therethrough, said means furthermore being connected to supply and discharge ducts for cleaning and regenerating the ion exchange material present therein by means of a washing liquid such as water, in particular salt water.

6.  The system of claim 4, <u>characterised</u> in that the ion exchange means is included in a primary system for removing dissolved matter from a liquid, and in that the container and associated circulating duct constitute a secondary system for periodically regenerating said ion exchange means with water circulated through said container and duct in a substantially closed circuit, the activated air being used for chemically attacking the substances removed from said ion exchange means so as to make the water thus treated reusable for regenerating the latter means.

7.  The system of claim 5 or 6, <u>characterised</u> by two containers each being provided with air dispersing means and associated activating apparatus, one container being used for a primary treatment of the water to be treated, and the other one being included in the regenerating circuit of an ion exchange means included in the circulating duct of said first container.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | C 02 F 1/78 |
| X | DE-A-2 307 877 (R.WIEST) *The whole document* | 1-2 | |
| | --- | | |
| X | DE-A-2 719 638 (SCHOLL) *Pages 1-4* | 1-7 | |
| | --- | | |
| D,A | US-A-4 214 962 (A.J.PINCON) *Column 8, lines 39-56* | 1 | |
| | --- | | |
| A | FR-A-2 394 495 (CONSOLID. FOODS) *Page 18; claims 1,2* | 1-7 | |
| | --- | | |
| A | CA-A-1 028 581 (A.E.BIRKBECK et al.) *Pages 22-23; claims 1-4* | 1-7 | TECHNICAL FIELDS SEARCHED (Int. Cl. ³) |
| | --- | | |
| A | DE-A-2 243 304 (E.SANDER) *Page 5; claim 1* | 1 | C 02 F |
| | --- | | |
| A | GB-A- 398 312 (W.M.BAILEY) *The whole document* | 1-2 | |
| | ----- | | |

The present search report has been drawn up for all claims

| Place of search | Date of completion of the search | Examiner |
|---|---|---|
| THE HAGUE | 08-02-1983 | VAN AKOLEYEN H.T.M. |